Europäisches Patentamt

(19) European Patent Office

Office européen des brevets

(11) Publication number: **0 450 987 A2**

(12) **EUROPEAN PATENT APPLICATION**

(21) Application number: **91303077.1**

(22) Date of filing: **08.04.91**

(51) Int. Cl.$^5$: **G01N 15/06, G01N 27/72**

(30) Priority: **06.04.90 GB 9007857**

(43) Date of publication of application:
**09.10.91 Bulletin 91/41**

(84) Designated Contracting States:
**AT BE CH DE DK ES FR GB GR IT LI LU NL SE**

(71) Applicant: **Parker, Dennis Amerena**
**5, Rhondda Fechan**
**Ferndale, Mid Glamorgan CF43 4LN (GB)**
Applicant: **Parker, Richard Vincent**
**128 East Road**
**Tylorstown, Mid Glamorgan (GB)**

(72) Inventor: **Parker, Dennis Amerena**
**5, Rhondda Fechan**
**Ferndale, Mid Glamorgan CF43 4LN (GB)**
Inventor: **Parker, Richard Vincent**
**128 East Road**
**Tylorstown, Mid Glamorgan (GB)**

(74) Representative: **James, Michael John Gwynne**
**et al**
**Wynne-Jones, Lainé & James Morgan Arcade**
**Chambers 33, St. Mary Street**
**Cardiff Clamorgan CF1 2AB (GB)**

(54) **Improvements relating to debris sample measurement devices.**

(57) A transducer assembly 2, for measurement of debris samples, is mounted in a deck 1 and a rotatable disk-shaped sample carrier 3, incorporating sample pockets 10 and 11, is also supported by the deck 1 by means of a drive shaft 4 set within a locating bearing 5. The sample carrier 3 has parallel faces and a precise plane underside and is made from non-metallic, non-permeable, non-conductive, stable, impervious material. The carrier 3 is supported at or near its circumference by three bearing wheel assemblies 6 incorporating bearing wheels 7. The sample carrier 3 is free to rotate but is precisely constrained in the plane of rotation onto the bearing wheels 7 by means of a clutch spring 8 and a quick-release bush 9.

Fig. 1

Fig. 1A

British Patent Nos. 2165650 and 2186978 illustrate types of alternating field magnetometers which can be used for the purpose of measuring a quantity of metal debris in a debris sample. When using such apparatus it is important that the debris sample should be positioned precisely and consistently in a position adjacent to one of the transducer coils of the measuring device. There is also a need for a measurement assembly which is capable of carrying out continuous measurement of an accumulation of debris within a circulating liquid system.

According to one aspect of the present invention there is provided a debris sample measurement device comprising a support deck carrying an electro-magnetic transducer assembly for performing a measurement of a debris sample, a carrier disk of plain circular form constructed from a stable non-metallic, non-conductive material located rotatably on a central axis and supported on or near its circumference by at least three support bearings, whereby different parts of the disk may be moved directly above the magnetometer transducer, support means being provided at one or more of those parts for the mounting of a support member incorporating a debris sample.

The method of support of the carryer disk is such that when the debris sample is carried round to the position above the magnetometer transducer it will always be precisely positioned at the right height. It is greatly preferred that the carrier disk and the support deck should. incorporate sensors for detecting accurately the position and angular translation of the carrier disk relative to the transducer assembly. The location sensors could comprise a small optical prism placed flush with the underside of the carrier disk for positioning appropriately relative to one or more pairs of photo-electric transmission and receiver devices.

The bearings supporting the carrier disk are preferably spaced radially and directed tangentially. Three bearings are preferred but more could be provided if desired.

The support means can comprise one or more pockets or platforms for receipt of or for carrying the support member. Advantageously, the carrier disk may be provided with an additional support means for holding a calibration sample to enable a calibration reading to be taken.

It is preferred that the carrier disk should be located axially by a central bearing, with a spring loaded magnetic clutch or other quick-release spring action device being provided to supply a downward thrust onto the support bearings. A servo drive motor can be provided for rotation of the carrier disk, the drive motor operating on a central location shaft or on a peripherally mounted friction wheel which bears against the circumference of the disk.

The invention also extends towards a method of performing a debris sample measurement using the measurement device of this invention as hereinbefore defined, wherein a metallic debris sample is moved precisely from one datum. position displaced from the transducer coils whereby the magnetometer can be referenced to zero, to a second position where the debris sample is positioned directly over the transducer whereby the magnetometer can produce a sample reading.

From a still further aspect, in accordance with the invention, there is provided a debris measurement device for measuring the amount of debris in a liquid system and comprising an electro-magnetic transducer assembly for performing the measurement of a debris sample together with a filter capsule for connection into part of the system in which the liquid circulates, the capsule being positioned adjacent to one of the coils of the transducer assembly such that the plane of the filter lies substantially at right angles to the axis of the transducer coil.

Preferably, the two coils of the electro-magnetic assembly will be interconnected with two resistor elements, at least one of which is variable, to form a bridge measuring circuit, with means being provided for maintaining the bridge circuit in a condition of continuous balance, together with indicating means for determining the changes made to the bridge circuit in order to maintain the balanced condition.

In the preferred arrangement there is provided control means incorporating an error balancing servo for varying the magnitude of the resistance of one of the resistor elements of the bridge continuously to achieve a balance point. Furthermore, an additional servo device can be connected to the bridge circuit output, the additional servo controlling the position of a metal plate positioned axially relative to one of the coils of the magnetometer to provide additional balancing of the circuit of the device. A further variable resistor element in the form of a resistive potentiometer, encoder, or other suitable electronic device may be linked to the bridge balancing servo, to act as part of the indicating means for determining the change applied to the bridge circuit which is representative of the amount of metal debris accumulated in the filter.

As a further preferred feature there is provided means for creating vector addition of a synchronous electronic out-of-phase system to cancel any out-of-phase error EMFS and to create an additional fine balance of the bridge circuit, either by means of a subsidiary servo or feedback loop fed back into the bridge circuit mixing point. This method provides a more precise overall operation of the magnetometer bridge balance measuring system.

The invention may be performed in various ways and preferred embodiments thereof will now be described with reference to the accompanying drawings, in which:-

Figure 1 is a side view of a debris sample carrier and measurement device of this invention;

Figure 1A illustrates a detail of part of the device shown in Figure 1;

Figure 2 is a plan view of the device shown in Figure 1;

Figure 2A is a side view of a detail of part of the device shown in Figure 2;

Figure 3 is a side view of an alternative form of carrier and measurement device of the invention;

Figure 4 is a plan view of the device shown in Figure 3;

Figure 5 is a section through a magnetic clutch device for use with the device of Figures 3 and 4;

Figure 6 is a side view of a debris accumulation and measurement device of this invention; and

Figure 7 is a diagramatic circuit drawing of a control circuit for the device of Figure 6.

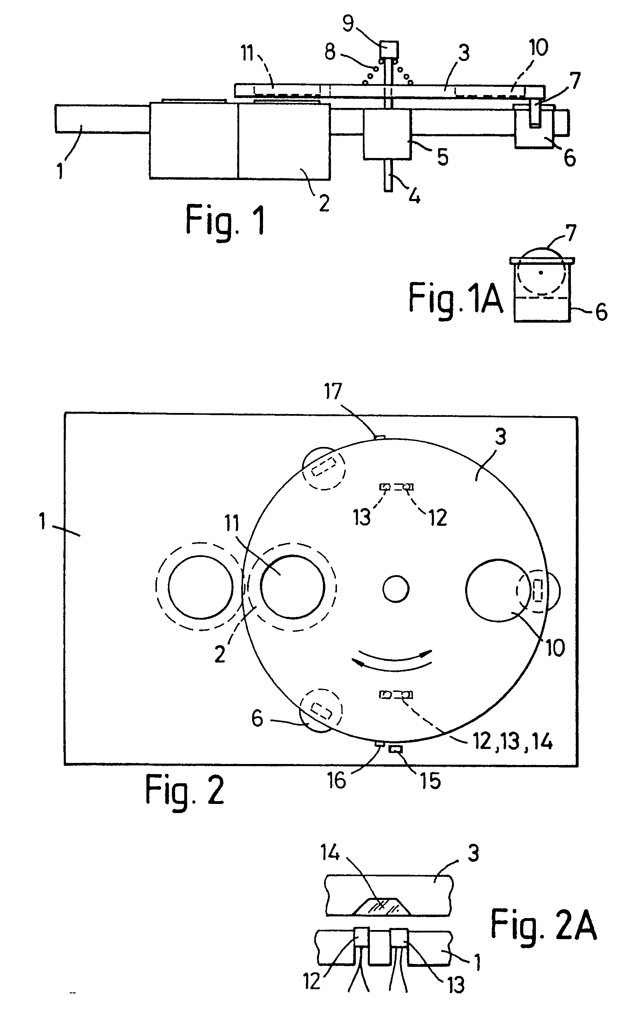

Referring now to Figures 1 and 2, these show an apparatus for measurement of debris samples, the operating parts being carried on an assembly deck 1. A measurement device in the form of a transducer assembly 2 (such as of the form as described in British Patents Nos. 2165650 and 2186978) is mounted in the deck 1 and a rotatable disk-shaped sample carrier 3 is also supported by the deck 1 by means of a drive shaft 4 set within a locating bearing 5. The sample carrier 3 has parallel faces and a precise plane underside and is made from non-metallic, magnetically-non-permeable, non-conductive, stable, impervious material. The carrier 3 is supported at or near its circumference by three bearing wheel assemblies 6 incorporating bearing wheels 7 (also shown in Figure 1A). The sample carrier 3 is free to rotate but is precisely constrained in the plane of rotation onto the bearing wheels 7 by means of a clutch spring 8 and a quick-release bush 9.

The carrier 3 incorporates two pockets 10 and 11, of identical shape. In use the carrier 3 is translated between set positions wherein the empty pocket 11 is initially positioned over the transducer assembly 2 and the magnetometer is then set to zero set condition. The shaft 4 is then made to rotate through 180° so that the pocket 10 (which will contain a debris sample) is positioned over the transducer. Measurement of the quantity of debris in the sample can then be made by means of the transducer assembly 2. The start and stop positions of the carrier 3 are sensed by optical sensor elements 12 and 13 associated with a prism 14. Sensor 12 is an infrared LED receiver, whilst sensor 13 is a photo-transistor transmitter. This arrangement allows opto-electronic signals to be transmitted for enabling the magnetometer 2 to operate in the zero and read conditions when the carrier 3 is in either of the respective precisely defined positions. A further aid to the precise stop and start positions for the carrier disk 3 is provided by a stop member 15 fixed to the deck 1 associated with locating stops 16 and 17 on or near the circumference of the disk 3.

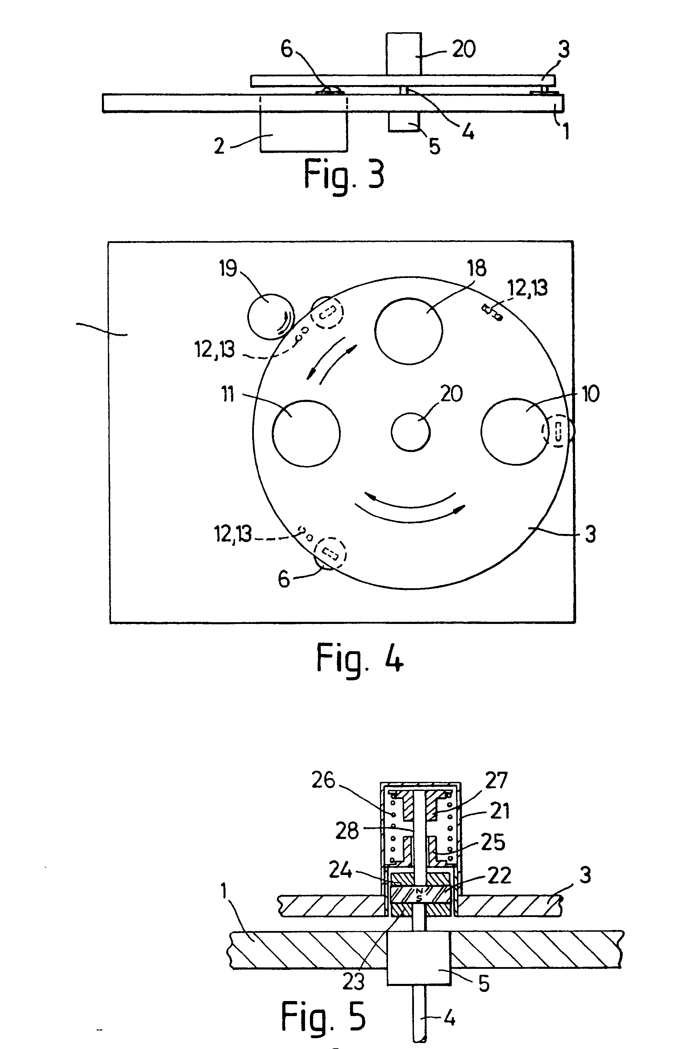

In the modified arrangement illustrated in Figures 3 and 4 the disk 3 incorporates an additional pocket 18 which can be fitted with a calibration sample. For this arrangement, three sets of sensor elements 12 and 13 are provided to determine the precise positioning of each of the three pockets 10, 11 and 18 over the transducer 2. In use, after the reset and zero condition of the instrument has been established with the empty pocket 11 of the magnetometer positioned over the transducer the pocket with the calibration sample is then translated to the position over the transducer 2. This enables the calibration level of the magnetometer to be checked and adjusted if necessary. The carrier 3 is then rotated back so that the empty pocket 11 is positioned over the transducer so that zero conditions may be re-established. Finally, the carrier 3 is rotated until the sample pocket 10 is positioned over the transducer so that the magnetometer can establish a fully corrected reading of the sample. Once the reading has been completed the equipment is returned to the zero condition with the empty pocket 11 being replaced over the transducer.

Figure 4 also illustrates an alternative form of peripheral drive to turn the carrier disk 3 by means of a wheel 19 mounted on a bearing mount so that it makes frictional contact with the circumference of the carrier 3. A central thrust device 20 provides central location on the bearing shaft 4 and a uniform downward thrust.

Figure 5 illustrates, as a useful accessory, a magnetic clutch device, the purpose of this is to provide a central bearing location onto the shaft 6 and a specific downward thrust of the carrier disk 3 onto its bearers, and the ability to remove the carrier disk 3 from the deck 1. This clutch device comprises a hollow body 21 placed in the centre of the carrier disk 3 and within this there is provided a disk magnet 22 fastened to a backplate 23 and the drive shaft 4. The magnetic field provides attraction, location and, when required, friction drive to a mild steel plate 24. A bush 25 forms a location for one end of a compression spring 26 which transmits the thrust via a fixed bush 27 and a clutch shaft 28. The disk carrier 3 may be removed easily by lifting the magnetic clutch disk carrier assembly against the magnetic field attraction.

A programmable version of the A.C. magnetometer 2 employing the carrier disk 3 as shown in Figures 3 and 4, may have the functions of null, reset and zero, and auto-calibration and performing a sequence of sample readings.

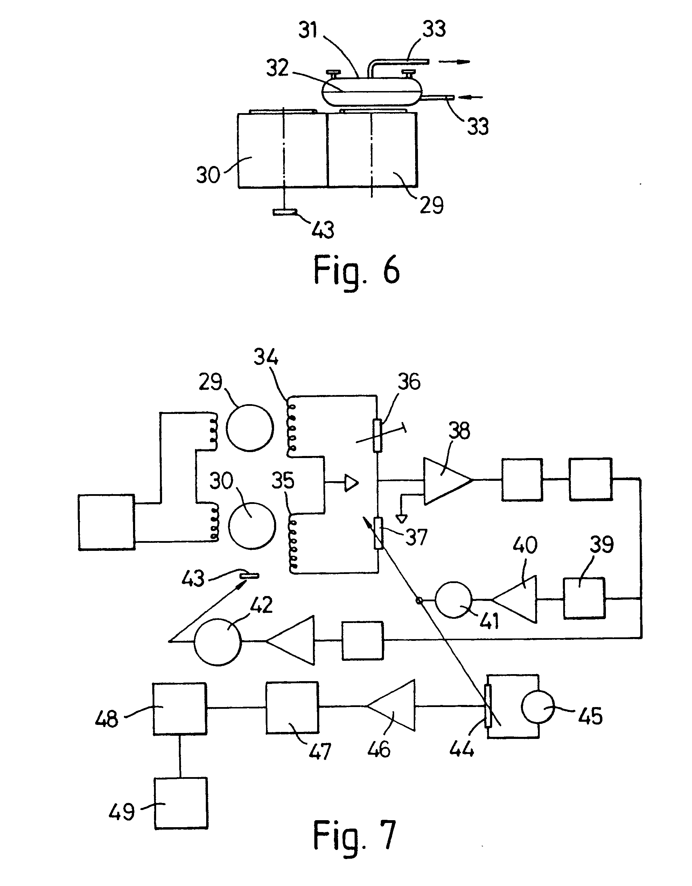

In Figure 6 there is shown a device for the continuous accumulation and monitoring of metal debris in a circulating liquid system. This employs a magnetometer (such as is described in British Patents Nos. 2165650 and 2186978) incorporating two transducers 29 and 30. A filter module 31 (incorporating a filter membrane 32) is attached at a position adjacent to the sampling area of the transducer 29 and accumulates metal debris in the filter module as liquid is circulated through pipes 33. The magnetometer system is held in a condition of continuous balance whilst the mass of metallic debris is accumulating but an output is created (by means of a circuit shown in Figure 7) which is indicative of the level of debris accumulation.

Referring now to the circuit of Figure 7, the detector coils 34 and 35 of the transducers 29 and 30 are linked with variable resistive elements 36 and 37 to form an electrical bridge. The resistive element 36 of the bridge is adjusted to preset the device to a value which will enable the other variable resistive element 37 (for example a potentiometer) to be set to a suitable initial value. As metallic debris accumulates in the filter module 31, the bridge is maintained in balance by the continuous and proportional adjustment of the resistive element 37, in the following manner.

The output from the bridge passes through an amplifier 38 and then from there to a phase sensitive detector 39, followed by a servo amplifier 40 controlling a servo motor 41. This servo motor 41 directly controls the setting of the potentiometer 37 so as to maintain bridge balance. A similarly fed second servo motor 42 controls the position of a metal proximity plate 43 situated adjacent to the transducer 30 which then carries out a further balancing of the whole system. A subsidiary electronic feedback control loop vectorially adds an EMF signal to the bridge measuring point so as to cancel out of balance EMFS not provided for by the resistive bridge elements 34 and 35.

A second potentiometer 44 controlled from the servo motor 41 operates in unison with the potentiometer 37. The potentiometer 44 may be provided with a reference voltage potential from the component 45, across its outer fixed resistive value terminals. The wiper contact potential is then used to produce a proportional signal potential which is amplified through an amplifier 46 and then passes through an analogue/digital converter 47 and a microprocessor 48 to an electronic indication device 49.

The output of the apparatus is a linear function of the mass of accumulated metal debris. The indication device 49 can be set to operate once the debris level exceeds a predetermined value. The indication device could comprise an alarm device, an analogue indicator, a digital display, a printout device or an interface with a computer, for example. A D.C. signal may be derived to represent the accumulated mass of metal debris material. The method of measurement of debris accumulation is particularly accurate because the magnetometer circuit detection and control system is in a state of continual balance. The method can be used to detect a build-up of metal debris in the calibration system of a mechanical plant or machine at any given time during its continuous operation.

## Claims

1. A debris sample measurement device comprising a support deck carrying an electro-magnetic transducer assembly for performing a measurement of a debris sample, a carrier disk of plain circular form constructed from a stable non-metallic, non-conductive material located rotatably on a central axis and supported on or near its circumference by at least three support bearings, whereby different parts of the disk may be moved directly above the magnetometer transducer, support means being provided at one or more of those parts for the mounting of a support member incorporating a debris sample.

2. A device according to Claim 1 wherein the bearings supporting the carrier disk are radially spaced and are directed tangentially, and/or the support means comprises one or more pockets or platforms for receipt of or for carrying the support member, and/or the carrier disk is located axially by a central bearing, and a spring loaded magnetic clutch or other quick-release spring action device is provided to supply a downward thrust onto the support bearings.

3. A device according to Claim 1 or Claim 2, wherein the carrier disk and the support deck incorporate sensors for detecting accurately the position and angular translation of the carrier disk relative to the transducer assembly, the location sensors preferably comprising a small optical prism placed flush with the underside of the carrier disk for positioning appropriately relative to one or more pairs of photo-electric transmission and receiver devices.

4. A device according to any one of Claims 1 to 3, wherein a servo drive motor is provided for rotation of the carrier disk, the drive motor operating on a central location shaft or on a peripherally mounted friction wheel which bears against the circumference of the disk, and/or the carrier disk is provided with an additional support means for holding a calibration sample to enable a calibration reading to be taken.

5. A method of performing a debris sample measurement using the measurement device of any one of Claims 1 to 4, wherein a metallic debris sample is moved precisely from one datum position displaced from the transducer coils whereby the magnetometer can be referenced to zero, to a second position where the debris sample is positioned directly over the transducer whereby the magnetometer can produce a sample reading.

6. A debris measurement device for measuring the amount of debris in a liquid system and comprising an electro-magnetic transducer assembly for performing the measurement of a debris sample together with a filter capsule for connection into part of the system in which the liquid circulates, the capsule being positioned adjacent to one of the coils of the transducer assembly such that the plane of the filter lies substantially at right angles to the axis of the transducer coil.

7. A measuring device according to Claim 6, wherein the two coils of the electro-magnetic assembly are interconnected with two resistor elements, at least one of which is variable, to form a bridge measuring circuit, and means are provided for maintaining the bridge circuit in a condition of continuous balance, together with indicating means for determining the changes made to the bridge circuit in order to maintain the balanced condition.

8. A measuring device according to Claim 6 or Claim 7, wherein control means incorporating an error balancing servo is provided for varying the magnitude of the resistance of one of the resistor elements of the bridge continuously to achieve a balance point, and preferably an additional servo device is connected to the bridge circuit output, the additional servo controlling the position of a metal plate positioned axially relative to one of the coils of the magnetometer to provide additional balancing of the circuit of the device.

9. A measuring device according to any one of Claims 6 to 8, wherein means is provided for creating vector addition of a synchronous electronic out-of-phase system to cancel any out-of-phase error EMFS and to create an additional fine balance of the bridge circuit, either by means of a subsidiary servo or feedback loop fed back into the bridge circuit mixing point.

10. A measuring device as claimed in Claim 8 or 9, wherein a further variable resistor element in the form of a resistive potentiometer, encoder, or other suitable electronic device is linked to the bridge balancing servo, to act as part of the indicating means for determining the change applied to the bridge circuit which is representative of the amount of metal debris accumulated in the filter.

11. Any novel feature or combination of features of a debris sample measurement device or a method of measuring a debris sample substantially as herein described and/or illustrated in the accompanying drawings.

Fig. 1

Fig.1A

Fig. 2

Fig. 2A

Fig. 3

Fig. 4

Fig. 5

Fig. 6

Fig. 7